# EUROPEAN PATENT APPLICATION

(11) **EP 4 582 491 A1**
(43) Date of publication of application: **09.07.2025**
(21) Application number: 23860165.2
(22) Date of filing: 24.08.2023
(51) Int. Cl.: C08L 101/16, C08J 3/12, C08J 5/04, C08L 1/00, C08L 67/00

(54) **RESIN COMPOSITION CONTAINING BIODEGRADABLE RESIN**

(30) Priority: 29.08.2022 JP 2022136029
(71) Applicant: Mitsubishi Chemical Corporation, Tokyo 100-8251 (JP)
(72) Inventor: MACHIDA, Kazuki, Tokyo 100-8251 (JP); FUKUDA, Junki, Tokyo 100-8251 (JP)
(74) Representative: Hoffmann Eitle
(86) International application number: PCT/JP2023/030409
(87) International publication number: WO 2024/048402

(57) **Abstract**

A resin composition having biodegradability and good moldability and capable of forming a molded product with excellent appearance and mechanical properties is provided. The resin composition contains a biodegradable resin (A) and cellulose (B), wherein a ratio (D90/D10) between a 90% cumulative mean fiber diameter (D90) and a 10% cumulative mean fiber diameter (D10) of the cellulose (B) is equal to or less than 5.5.

## Description

### TECHNICAL FIELD

The present disclosure relates to a resin composition containing a biodegradable resin. More particularly, the present disclosure relates to a resin composition that contains a biodegradable resin and cellulose, has good moldability, and can form a molded product with good appearance and mechanical properties.

### BACKGROUND ART

In recent years, on the background of requests for reducing environmental burdens, various biodegradable resins have been increasingly researched and developed. Known examples of the biodegradable resins include polylactic acid, polybutylene succinate, polybutylene succinate adipate, and polybutylene adipate terephthalate.

Pulp fibers have drawn attention as a material excellent particularly in biodegradability. For example, JP-A-2021-161337 proposes a molding composition containing polybutylene succinate or polybutylene succinate adipate as a biodegradable resin, and pulp fibers, and discloses that a molded product obtained using the molding composition has both rigidity and impact resistance.

### SUMMARY

### PROBLEMS TO BE SOLVED BY THE DISCLOSURE

However, a molded product obtained using a composition containing pulp fibers, like the molding composition described in JP-A-2021-161337, tends to have a coarse surface shape. It is difficult to obtain a molded product with a good appearance, and there is still room for improvement. The resin composition described in JP-A-2021-161337 has also room for improvement in moldability and mechanical properties of the resulting molded product.

### MEANS FOR SOLVING THE PROBLEMS

The present disclosure is made in view of the above problem and provides a resin composition that has biodegradability and good moldability and can form a molded product with good appearance and mechanical properties.

During the course of studies in light of the above circumstances, the inventors of the present disclosure have noted a fiber diameter distribution of cellulose blended in a molding resin composition. The inventors of the present disclosure have conducted elaborate studies on the effect of a fiber diameter distribution of cellulose on the appearance of molded products, in particular, on surface smoothness, and found that surprisingly, by controlling a fiber diameter distribution of cellulose in the resin composition within a particular range, a molded product with good appearance can be obtained, and a resin pressure rise during resin extrusion is less likely to occur, resulting in excellent moldability and good mechanical properties of the resulting molded product.

Specifically, the present disclosure provides the following [1] to [19].
[1] A resin composition containing a biodegradable resin (A) and cellulose (B), wherein a ratio (D90/D10) between a 90% cumulative mean fiber diameter (D90) and a 10% cumulative mean fiber diameter (D10) of the cellulose (B) is equal to or less than 5.5.
[2] A resin composition containing a biodegradable resin (A) and cellulose (B), wherein a ratio (D90/D10) between a 90% cumulative mean fiber diameter (D90) and a 10% cumulative mean fiber diameter (D10) of the cellulose (B) is less than 4.2.
[3] The resin composition according to [1] or [2], wherein the biodegradable resin (A) is an aliphatic polyester resin.
[4] The resin composition according to any one of [1] to [3], wherein the biodegradable resin (A) is an aliphatic polyester resin including an aliphatic diol unit and an aliphatic dicarboxylic acid unit as main repeating units.
[5] The resin composition according to [4], wherein the biodegradable resin (A) further contains an aliphatic aromatic polyester resin.
[6] The resin composition according to any one of [1] to [5], wherein the cellulose (B) has an average fiber length equal to or less than 150 µm.
[7] The resin composition according to any one of [1] to [6], wherein the cellulose (B) is present in an amount equal to or more than 30% by mass of a total amount of the resin composition.
[8] The resin composition according to any one of [1] to [7], wherein the resin composition has a strain at break of 0.1 to 30% as measured in conformity with JIS K7161-1:2014 (ISO 527-1:2012).
[9] The resin composition according to any one of [1] to [8], wherein the resin composition has a maximum stress of 1 to 30 MPa as measured in conformity with JIS K7161-1:2014 (ISO 527-1:2012).
[10] A molded product including the resin composition according to any one of [1] to [9].
[11] A container including the resin composition according to any one of [1] to [9].
[12] A pellet including a resin composition containing a biodegradable resin (A) and cellulose (B), wherein the pellet has an arithmetic mean surface roughness Rₐ equal to or less than 43 µm.
[13] A pellet including a resin composition containing a biodegradable resin (A) and cellulose (B), wherein the pellet has an arithmetic mean surface roughness Rₐ equal to or less than 30 µm.
[14] The pellet according to [12] or [13], wherein the pellet has a maximum height surface roughness R_{Z} equal to or less than 400 µm.
[15] The pellet according to any one of [12] to [14], wherein the biodegradable resin (A) is an aliphatic polyester resin.
[16] The pellet according to any one of [12] to [15], wherein the biodegradable resin (A) is an aliphatic polyester resin including an aliphatic diol unit and an aliphatic dicarboxylic acid unit as main repeating units.
[17] The pellet according to [16], wherein the biodegradable resin (A) further contains an aliphatic aromatic polyester resin.
[18] The pellet according to any one of [12] to [17], wherein the cellulose (B) has an average fiber length equal to or less than 150 µm.
[19] The pellet according to any one of [12] to [18], wherein the cellulose (B) is present in an amount equal to or more than 30% by mass of a total amount of the resin composition.

The present disclosure also provides the following [20] to [24].
[20] A pellet including the resin composition according to any one of [1] to [9], wherein the pellet has a surface roughness Rₐ equal to or less than 43 µm.
[21] A pellet including the resin composition according to any one of [1] to [9], wherein the pellet has a surface roughness Rₐ equal to or less than 30 µm.
[22] The pellet according to [20] or [21], wherein the pellet has a surface roughness R_{Z} equal to or less than 400 µm.
[23] The pellet according to any one of [12] to [19], wherein a ratio (D90/D10) between a 90% cumulative mean fiber diameter (D90) and a 10% cumulative mean fiber diameter (D10) of the cellulose (B) is equal to or less than 5.5.
[24] The pellet according to any one of [12] to [19], wherein a ratio (D90/D10) between a 90% cumulative mean fiber diameter (D90) and a 10% cumulative mean fiber diameter (D10) of the cellulose (B) is less than 4.2.

### EFFECTS OF THE DISCLOSURE

The resin composition according to the present disclosure has biodegradability, has good moldability, and can form a molded product with good appearance and mechanical properties.

### EMBODIMENTS OF THE DISCLOSURE

Hereinafter the present disclosure will be described more specifically based on exemplary embodiments of the present disclosure. However, the present disclosure is not limited to these embodiments.

In the present disclosure, the expression "X to Y" (X and Y are each a given number) is intended to encompass "preferably greater than X" or "preferably less than Y" unless otherwise specified, in addition to the meaning of "equal to or more than X and equal to or less than Y".

Further, in the present disclosure, the expression "X and/or Y" (X and Y are each a given configuration) is intended to mean at least one of X and Y and mean the following three meanings: only X; only Y; and X and Y.

A resin composition according to an embodiment of the present disclosure (which hereinafter may be referred to as "the present resin composition") contains a biodegradable resin (A) and cellulose (B), wherein a ratio (D90/D10) between a 90% cumulative mean fiber diameter (D90) and a 10% cumulative mean fiber diameter (D10) of the cellulose (B) is equal to or less than 5.5. When the ratio (D90/D10) of cumulative mean fiber diameters of the cellulose included in the resin composition is in the above range, the moldability is good, and a molded product with good appearance and mechanical properties can be obtained.

### [Ratio (D90/D10) Between 90% Cumulative Mean Fiber Diameter (D90) and 10% Cumulative Mean Fiber Diameter (D10)]

It is important that the ratio (D90/D10) between a 90% cumulative mean fiber diameter (D90) and a 10% cumulative mean fiber diameter (D10) in the cellulose (B) used in the present resin composition is controlled to be equal to or less than 5.5, which is a value smaller than the ratio in a conventional resin composition, in order to improve the moldability and the appearance and mechanical properties of a molded product. In order to further improve the appearance and the like of a molded product, the ratio (D90/D10) is preferably equal to or less than 5.25, more preferably equal to or less than 5.0, even more preferably equal to or less than 4.8, particularly preferably less than 4.2, especially preferably equal to or less than 4.0. The lower limit of the ratio (D90/D10) is, for example, equal to or more than 3.0, preferably equal to or more than 3.2, though not limited thereto.

In the present resin composition, the ratio (D90/D10) between the 90% cumulative mean fiber diameter (D90) and the 10% cumulative mean fiber diameter (D10) of the cellulose (B) is controlled within the above range, so that the resin pressure during molding can be reduced moderately, and a molded product with good appearance can be provided. Further, good moldability is achieved because the flowability of the resin can be improved. In addition, the resulting molded product has good mechanical properties. When the ratio (D90/D10) falls outside the above range, the resin pressure during molding fails to be sufficiently reduced, the moldability is insufficient, and it tends to be difficult to obtain a molded product with good appearance and mechanical properties.

In order to control the ratio (D90/D10) to equal to or less than 5.5, the type of the cellulose (B) and the conditions such as blending ratio are adjusted as appropriate.

The 90% cumulative mean fiber diameter (D90) and the 10% cumulative mean fiber diameter (D10) are measured by a known measurement method based on a volume cumulative distribution curve. Specifically, the 90% cumulative mean fiber diameter (D90) means a particle diameter at cumulative 90% based on volume in a particle size distribution measured by dry measurement using a laser diffraction/scattering particle size distribution analyzer, and the 10% cumulative mean fiber diameter (D10) means a particle diameter at cumulative 10% based on volume.

Each component used in the present resin composition will now be described.

### [Biodegradable Resin (A)]

The biodegradable resin (A) used in the present resin composition is any resin that has biodegradability and is not limited. Specifically, examples include aliphatic polyester resins, polyvinyl alcohol resins, and naturally derived biodegradable resins. These may be used alone or in combination of two or more. Among these, the aliphatic polyester resins are preferred.

The aliphatic polyester resins may be any polyester resin in which an aliphatic structure (including an alicyclic structure) has the largest molar ratio relative to the entire structure, and may be, for example, an aliphatic aromatic polyester resin partially having an aromatic structure in addition to an aliphatic structure. More specifically, examples include (a1) an aliphatic polyester resin having an aliphatic diol unit and an aliphatic dicarboxylic acid unit as main constitutional units; (a2) an aliphatic polyester resin having an aliphatic oxycarboxylic acid unit as a main constitutional unit; (a3) an aliphatic aromatic polyester resin having an aliphatic diol unit, an aliphatic dicarboxylic acid unit, and an aromatic dicarboxylic acid unit as main constitutional units; and a mixture of these polyester resins. These can be used alone or in combination of two or more. Among these, (a1) the aliphatic polyester resin having an aliphatic diol unit and an aliphatic dicarboxylic acid unit as main constitutional units is preferred.

As used herein the "unit" means a constitutional unit that is derived from a monomer component used in production of the aliphatic polyester resin and contained in the aliphatic polyester resin, and the "main constitutional unit" means that a constitutional unit derived from a target monomer component is included in an amount equal to or more than 50 mol% in all constitutional units of the aliphatic polyester resin. The amount of the constitutional unit derived from a target monomer is preferably equal to or more than 60 mol%, more preferably equal to or more than 70 mol%, even more preferably 80 to 100 mol%. For example, the aliphatic polyester resin is preferably produced by a polymerization reaction of a raw material including an aliphatic diol and an aliphatic dicarboxylic acid component in an amount equal to or more than 50 mol%, preferably equal to or more than 60 mol%, more preferably equal to or more than 70 mol%, even more preferably 80 to 100 mol% in all monomer components used in the polymerization reaction of the aliphatic polyester resin.

### [(a1) Aliphatic Polyester Resin Having Aliphatic Diol Unit and Aliphatic Dicarboxylic Acid Unit as Main Constitutional Units]

The component (a1) is, for example, an aliphatic polyester resin having an aliphatic diol unit represented by the following formula (1) and an aliphatic dicarboxylic acid unit represented by the following formula (2) as main constitutional units.

-O-R₁₁-O- (1)

[In formula (1), R₁₁ represents a divalent linear aliphatic hydrocarbon group optionally having an oxygen atom in its chain, and is not limited to one kind when copolymerized.]

-OC-R₂₁-CO- (2)

[In formula (2), R₂₁ represents a direct bond or a divalent linear aliphatic hydrocarbon group, and is not limited to one kind when copolymerized.]

The aliphatic diol that provides the diol unit represented by formula (1) is, for example, an aliphatic diol having 2 to 10 carbon atoms, more preferably an aliphatic diol having 4 to 6 carbon atoms, though not limited thereto. Specifically, examples include ethylene glycol, 1,2-propanediol, 1,3-propanediol, 1,4-butanediol, 1,5-pentanediol, 1,6-hexanediol, 1,7-heptanediol, 1,8-octanediol, 1,9-nonanediol, 1,10-decanediol, neopentyl glycol, diethylene glycol, polyethylene glycol, polypropylene glycol, and polytetramethylene ether glycol. Among those, 1,4-butanediol is preferred. The aliphatic diols above may be used alone or in combination of two or more.

The aliphatic dicarboxylic acid component that provides the aliphatic dicarboxylic acid unit represented by formula (2) is an aliphatic dicarboxylic acid or an aliphatic dicarboxylic acid derivative such as alkyl ester thereof. The aliphatic dicarboxylic acid is, for example, an aliphatic dicarboxylic acid having 2 to 40 carbon atoms, more preferably an aliphatic dicarboxylic acid having 4 to 10 carbon atoms, though not limited thereto. Specifically, examples include succinic acid, adipic acid, suberic acid, sebacic acid, and dodecanedioic acid. Among these, succinic acid, adipic acid, and sebacic acid are preferred, succinic acid and adipic acid are more preferred, and succinic acid is particularly preferred. The aliphatic dicarboxylic acid components above may be used alone or in combination of two or more.

Specific examples of the component (a1) include an aliphatic polyester resin containing 1,4-butanediol and succinic acid, and an aliphatic polyester resin containing 1,4-butanediol, adipic acid, and succinic acid. These can be used alone or in combination of two or more. Among these, one or more selected from the group consisting of polybutylene succinate adipate and polybutylene succinate are preferred in order to further improve the moldability of the resin composition, and polybutylene succinate is more preferred.

When the aliphatic dicarboxylic acid is succinic acid, the proportion of the constitutional unit derived from succinic acid in all dicarboxylic acid units of the aliphatic polyester resin is typically 50 to 100 mol%, preferably 80 to 100 mol%, more preferably 90 to 100 mol%.

When the aliphatic dicarboxylic acid is succinic acid and adipic acid, the proportion of the constitutional unit derived from succinic acid in all dicarboxylic acid units of the aliphatic polyester resin is typically 50 to 95 mol%, preferably 60 to 93 mol%, more preferably 70 to 90 mol%, and the proportion of the constitutional unit derived from adipic acid in all dicarboxylic acid units is typically 5 to 50 mol%, preferably 7 to 40 mol%, more preferably 10 to 30 mol%.

The component (a1) has a melt flow rate (MFR) of preferably 1 to 150 g/10 minutes, more preferably 3 to 125g/10 minutes, even more preferably 4 to 100 g/10 minutes, particularly preferably 5 to 50 g/10 minutes, as measured at 190°C with a load of 2.16 kg in conformity with JIS K7210.

The component (a1) has a melting point of preferably 70 to 250°C, more preferably 75 to 200°C, even more preferably 80 to 150°C. When there are a plurality of melting points, it is preferable that at least one melting point is within the range above.

The component (a1) has a weight average molecular weight (Mw) of preferably 10,000 to 1,000,000, more preferably 20,000 to 500,000, even more preferably 50,000 to 400,000.

The weight average molecular weight (Mw) is measured by gel permeation chromatography(GPC) with polystyrene as a standard.

The physical properties of the aliphatic polyester resin used in the present resin composition are similar to the physical properties described in the section [(a1) Aliphatic Polyester Resin Having Aliphatic Diol Unit and Aliphatic Dicarboxylic Acid Unit as Main Constitutional Units] above, unless otherwise specified.

### [(a2) Aliphatic Polyester Resin Having Aliphatic Oxycarboxylic Acid Unit as Main Constitutional Unit]

Specific examples of the aliphatic oxycarboxylic acid component that provides the aliphatic oxycarboxylic acid unit in the component (a2) include lactic acid, glycolic acid, 2-hydroxy-n-butyric acid, 3-hydroxybutyric acid, 4-hydroxybutyric acid, 2-hydroxycaproic acid, 6-hydroxycaproic acid, 2-hydroxy-3,3-dimethylbutyric acid, 2-hydroxy-3-methylbutyric acid, 2-hydroxyisocaproic acid, 3-hydroxyvaleric acid, malic acid, citric acid, and lower alkyl esters or intramolecular esters thereof. Lactone compounds such as ε-caprolactone are also encompassed in the aliphatic oxycarboxylic acid. If these compounds have an optical isomer, the optical isomer may be any of D-form, L-form, or racemic form, and they may be in the form of solid, liquid, or aqueous solution. Among these, lactic acid, glycolic acid, 3-hydroxybutyric acid, 4-hydroxybutyric acid, 6-hydroxycaproic acid, and 3-hydroxyvaleric acid are preferred. These aliphatic oxycarboxylic acids may be used alone or in combination of two or more.

Specific examples of the component (a2) include polylactic acid, polyglycolic acid, poly(3-hydroxybutyrate), poly(4-hydroxybutyrate), poly(3-hydroxybutyrate-co-3-hydroxyvalerate), and polycaprolactone. These can be used alone or in combination of two or more.

The constitution of lactic acid included in polylactic acid is preferably D-lactic acid:L-lactic acid = 100:0 to 85:15 or 0:100 to 15:85 by mole. Another polylactic acid with a different ratio of D-lactic acid and L-lactic acid may be blended. A polylactic acid having D-lactic acid alone or L-lactic acid alone as a constitutional unit forms a crystalline resin with a high melting point and tends to have excellent heat resistance and mechanical properties.

Further, the polylactic acid may be a copolymer of the above polylactic acid and another oxycarboxylic acid and may include a unit derived from a small amount of chain extender. Examples of another oxycarboxylic acid include optical isomers of lactic acid (D-lactic acid for L-lactic acid, L-lactic acid for D-lactic acid), glycolic acid, 3-hydroxybutyric acid, 4-hydroxybutyric acid, 2-hydroxy-n-butyric acid, 2-hydroxy-3,3-dimethylbutyric acid, 2-hydroxy-3-methylbutyric acid, 2-methyl lactic acid, bifunctional aliphatic oxycarboxylic acids such as 2-hydroxycaproic acid, and lactones such as caprolactone, butyrolactone, and valerolactone. The unit derived from another oxycarboxylic acid may be used in an amount of less than 15 mol% in all constitutional units of the polylactic acid.

The component (a2) has a weight average molecular weight (Mw) of preferably 60,000 to 700,000, more preferably 80,000 to 400,000, even more preferably 100,000 to 300,000.

The weight average molecular weight (Mw) is measured by gel permeation chromatography(GPC) with polystyrene as a standard.

### [(a3) Aliphatic Aromatic Polyester Resin]

The component (a3) is, for example, an aliphatic aromatic polyester resin having an aliphatic diol unit, an aliphatic dicarboxylic acid unit, and an aromatic dicarboxylic acid unit as main constitutional units, and contains an aliphatic diol unit represented by the above formula (1), an aliphatic dicarboxylic acid unit represented by the above formula (2), and an aromatic dicarboxylic acid unit represented by the following formula (3) as essential components. The component (a3) may further contain the oxycarboxylic acid unit described above.

-OC-R₃₁-CO- (3)

[In formula (3), R₃₁ represents a divalent aromatic hydrocarbon group, and is not limited to one kind when copolymerized.]

The aliphatic diol that provides the diol unit represented by formula (1) and the aliphatic dicarboxylic acid component that provides the aliphatic dicarboxylic acid unit represented by formula (2) are the same as those described in the section [(a1) Aliphatic Polyester Resin Having Aliphatic Diol Unit and Aliphatic Dicarboxylic Acid Unit as Main Constitutional Units] above, and preferred examples are also the same.

Examples of the aromatic dicarboxylic acid component that provides the aromatic dicarboxylic acid unit represented by formula (3) include, but not limited to, terephthalic acid, isophthalic acid, naphthalenedicarboxylic acid, and diphenyldicarboxylic acid. These may be acid anhydrides. Other examples include aromatic dicarboxylic acid derivatives such as lower alkyl esters of these aromatic dicarboxylic acids. Among these, terephthalic acid, isophthalic acid, or their lower alkyl (e.g., alkyl having 1 to 4 carbon atoms) ester derivatives are preferred. These may be used alone or in combination of two or more. In particular, terephthalic acid and/or a methyl ester of terephthalic acid, or a mixture containing terephthalic acid and/or a methyl ester of terephthalic acid and isophthalic acid and/or a methyl ester of isophthalic acid is preferred.

As a specific example of the aliphatic aromatic polyester resin, polybutylene alkylate terephthalate is preferred in order to further improve the moldability of the resin composition, polybutylene adipate terephthalate or polybutylene succinate terephthalate is more preferred, and polybutylene adipate terephthalate is particularly preferred. These can be used alone or in combination of two or more.

In the present resin composition, the aliphatic polyester resins may be used alone or in combination of two or more. For example, two or more aliphatic polyester resins with different diol units or different dicarboxylic acid units may be used in combination.

The biodegradable resin (A) is present in an amount of, for example, equal to or less than 70% by mass of the total amount (100% by mass) of the resin composition, preferably 25 to 65% by mass, more preferably 30 to 60% by mass, even more preferably 35 to 58% by mass, particularly preferably 40 to 56% by mass, most preferably 45 to 55% by mass, though not limited thereto.

When the aliphatic polyester resin is used as the biodegradable resin (A), the aliphatic polyester resin is present in an amount of, for example, equal to or less than 70% by mass of the total amount (100% by mass) of the resin composition, preferably 25 to 65% by mass, more preferably 30 to 60% by mass, even more preferably 35 to 58% by mass, particularly preferably 40 to 56% by mass, most preferably 45 to 55% by mass.

When the component (a1) is used as the aliphatic polyester resin, the component (a1) is preferably present in an amount of, for example, 1 to 100 parts by mass of the total amount (100 parts by mass) of the aliphatic polyester resin included in the resin composition, more preferably 10 to 95 parts by mass, further preferably 25 to 95 parts by mass, even more preferably 30 to 95 parts by mass, particularly preferably 45 to 90 parts by mass, especially preferably 65 to 85 parts by mass.

When the component (a2) is used as the aliphatic polyester resin, the component (a2) is preferably present in an amount of, for example, 1 to 100 parts by mass of the total amount (100 parts by mass) of the aliphatic polyester resin included in the resin composition, more preferably 10 to 90 parts by mass, further preferably 20 to 85 parts by mass, even more preferably 30 to 80 parts by mass, particularly preferably 40 to 70 parts by mass.

When the component (a3) is used as the aliphatic polyester resin, the component (a3) is preferably present in an amount of, for example, 1 to 100 parts by mass of the total amount (100 parts by mass) of the aliphatic polyester resin included in the resin composition, more preferably 5 to 90 parts by mass, further preferably 5 to 75 parts by mass, even more preferably 5 to 70 parts by mass, particularly preferably 10 to 55 parts by mass, especially preferably 15 to 35 parts by mass.

When the component (a3) is included as the aliphatic polyester resin in addition to the component (a1) and/or the component (a2), the component (a3) is preferably present in an amount of, for example, 5 to 40 parts by mass of the total amount (100 parts by mass) of the aliphatic polyester resin included in the resin composition, more preferably 10 to 30 parts by mass, even more preferably 15 to 25 parts by mass.

When the component (a1) and/or the component (a2) and the component (a3) are used in combination as the aliphatic polyester resin, the mass ratio of the component (a3) to the component (a1) and/or the component (a2) ("(a3)/(a1)", "(a3)/(a2)", or "(a3)/[(a1)+(a2)]") is preferably 0.1 to 0.5, more preferably 0.15 to 0.45, even more preferably 0.2 to 0.4.

### [Cellulose (B)]

In the present resin composition, when the ratio (D90/D10) between a 90% cumulative mean fiber diameter (D90) and a 10% cumulative mean fiber diameter (D10) of the cellulose (B) included in the present resin composition is controlled within a particular range equal to or less than 5.5, a resin composition having good moldability and a molded product having good appearance and mechanical properties can be provided.

The 10% cumulative mean fiber diameter (D10) of the component (B) is, for example, preferably 1 to 30 µm, more preferably 2 to 20 µm, even more preferably 3 to 15 µm, particularly preferably 5 to 10 µm, though not limited thereto, in order to improve the moldability, and the appearance and mechanical properties of a molded product.

The 90% cumulative mean fiber diameter (D90) of the component (B) is, for example, preferably 5 to 70 µm, more preferably 8 to 60 µm, even more preferably 10 to 50 µm, particularly preferably 15 to 40 µm, though not limited thereto, in order to improve the moldability, and the appearance and mechanical properties of a molded product.

The 50% cumulative mean fiber diameter (D50) of the component (B) is, for example, preferably 2 to 50 µm, more preferably 4 to 40 µm, even more preferably 5 to 28 µm, particularly preferably 7 to 20 µm or less, though not limited thereto, in order to improve the moldability, and the appearance and mechanical properties of a molded product.

The 90% cumulative mean fiber diameter (D90), the 10% cumulative mean fiber diameter (D10), and the 50% cumulative mean fiber diameter (D50) of the component (B) are measured by a known measurement method. Specifically, a particle size distribution is determined by dry measurement using a laser diffraction/scattering particle size distribution analyzer. The particle diameter at cumulative 10% based on volume is the 10% cumulative mean fiber diameter (D10), the particle diameter at cumulative 50% based on volume is the 50% cumulative mean fiber diameter (D50), and the particle diameter at cumulative 90% based on volume is the 90% cumulative mean fiber diameter (D90).

The component (B) has an average fiber length of, for example, preferably equal to or less than 150 µm, more preferably 5 to 100 µm, more preferably 8 to 60 µm, even more preferably 10 to 30 µm, particularly preferably 15 to 25 µm, though not limited thereto, in order to improve the appearance of a molded product. If the average fiber length of the component (B) falls outside the above range, the resin pressure fails to be sufficiently reduced, and the appearance and mechanical properties of a molded product tend to be poor.

The component (B) has an average fiber thickness of, for example, preferably equal to or less than 30 µm, more preferably 1 to 20 µm, even more preferably 3 to 15 µm, though not limited thereto, in order to improve the appearance of a molded product. If the average fiber thickness of the component (B) falls outside the above range, the resin pressure fails to be sufficiently reduced, and the appearance and mechanical properties of a molded product tend to be poor.

The average fiber length and the average fiber thickness of the component (B) are measured by a known measurement method. For example, a plurality of cellulose fibers selected at random by image analysis of a scanning electron microscopic image are measured in the longitudinal direction as fiber lengths and in the widthwise direction as fiber thicknesses, and the arithmetic means of the measured lengths and thicknesses are obtained. More specifically, the method described later in Examples can be used for measurement.

The component (B) is produced using a known cellulose-containing raw material. Examples of the cellulose-containing raw material include wood fibers such as wood pulp from softwoods, hardwoods, and the like, cotton fibers such as linters, seed fibers such as bombax cotton and kapok, bast fibers such as hemp, flax, jute, ramie, kozo, and mitsumata, and leaf fibers such as Manila hemp and New Zealand hemp. These can be used alone or in combination of two or more.

Any commercially available product can be suitably used as the component (B). Examples include powder cellulose "ARBOCEL UFC100" and "ARBOCEL BE600-10TG" from Rettenmaier.

The component (B) is preferably present in an amount equal to or more than 30% by mass of the total amount (100% by mass) of the resin composition, though not limited thereto, in order to increase biodegradability and improve the appearance and the like of a molded product. In such a range, the amount of the component (B) is preferably 30 to 70% by mass, more preferably 35 to 65% by mass, even more preferably 40 to 60% by mass in order to achieve both biodegradability of the resin composition and the appearance of a molded product.

### [(C) Filler]

The present resin composition can contain a filler (C) (which hereinafter may be referred to as the component (C)) in addition to the component (A) and the component (B), for the moldability of the resin composition. For example, any known common inorganic filler or organic filler commonly used can be used as the component (C). The shape of the filler is not limited, and, for example, an inorganic filler in the form of fiber, sphere, plate, or needle can be used.

Specific examples of the component (C) include talc, anhydrous silica, mica, titanium oxide, calcium carbonate, diatomite, allophane, bentonite, potassium titanate, zeolite, sepiolite, smectite, kaolin, kaolinite, glass, limestone, carbon, wollastonite, calcined perlite, calcium silicate, sodium silicate, aluminum silicate, aluminum oxide, magnesium carbonate, calcium hydroxide, iron(II) carbonate, zinc oxide, iron oxide, aluminum phosphate, and barium sulfate. These may be used alone or in combination of two or more. Among these, talc is preferred.

The component (C) has an average particle diameter of preferably 0.5 to 30 µm, more preferably 0.6 to 20 µm, even more preferably 0.7 to 10 µm, particularly preferably 1 to 5 µm, though not limited thereto. The average particle diameter of the component (C) is a median diameter (d50) corresponding to 50% of the cumulative particle size distribution based on volume and can be measured, for example, using a laser diffraction/scattering particle size distribution analyzer (for example, product number LA-950 V2 from HORIBA, Ltd.).

The component (C) has a specific surface area of typically 1 to 200 m²/g, preferably 3 to 150 m²/g, more preferably 5 to 100 m²/g, even more preferably 10 to 50 m²/g, though not limited thereto. The specific surface area of the component (C) can be measured by a known method, for example, by the BET method.

The component (C) is present in an amount of preferably 0.5 to 15% by mass of the total amount (100% by mass) of the resin composition, more preferably 1 to 10% by mass, even more preferably 1.5 to 8% by mass, though not limited thereto, for the moldability of the resin composition.

### [Other Components]

The present resin composition can contain components (other components) ordinarily used in resin compositions, in addition to the components (A) to (C), in a range that does not impair the effects of the present disclosure. Examples of the other components that can be blended include, but not limited to, resins other than the biodegradable resin, plasticizer, lubricant, antistatic agent, antioxidant, photostabilizer, UV absorber, dye, pigment, hydrolysis inhibitor, crystal nucleating agent, antiblocking agent, light resistant agent, heat stabilizer, flame retardant, mold release agent, antifogging agent, surface wetting modifier, incineration aid, dispersion aid, various surfactants, slip agent, freshness retention agent, and antibacterial agent. These can be used alone or in combination of two or more. The amount of other components is, for example, less than 15% by mass, less than 10% by mass, less than 8% by mass of the total amount (100% by mass) of the resin composition, though not limited thereto.

Examples of the plasticizer include plasticizers having ester bonds in molecules, such as aliphatic dibasic acid ester plasticizers such as adipic acid ester plasticizer, sebacic acid ester plasticizer, and azelaic acid ester plasticizer, phthalic acid ester plasticizer, phosphoric acid ester plasticizer, citric acid ester plasticizer, glycolic acid ester plasticizer, trimellitic acid ester plasticizer, ricinoleic acid ester plasticizer, benzoic acid ester plasticizer, and acetic acid ester plasticizer. These can be used alone or in combination of two or more.

[Method of Producing the Present Resin Composition] The present resin composition is produced, for example, by melt kneading the above components using a single-screw or twin-screw extruder, a Banbury mixer, a mixing roll, or the like, in the same manner as known methods of producing resin compositions.

### (Mechanical Properties of the Present Resin Composition)

The present resin composition has a strain at break of preferably 0.1 to 30%, more preferably 0.5 to 25%, even more preferably 1 to 20% in terms of mechanical properties when a test specimen type 1A produced in conformity with JIS K7139:2009 is measured in conformity with JIS K7161-1:2014 (ISO 527-1:2012).

The present resin composition has a maximum stress of preferably 1 to 30 MPa, more preferably 3 to 25 MPa, even more preferably 5 to 20 MPa in terms of mechanical properties when a test specimen type 1A produced in conformity with JIS K7139:2009 is measured in conformity with JIS K7161-1:2014 (ISO 527-1:2012).

### [Applications of the Present Resin Composition]

The present resin composition is suitable for molding applications (molding composition) since a molded product having good appearance can be obtained.

[Molded Product (Pellets, etc.) of Resin Composition] A molded product according to an embodiment of the present disclosure (the present molded product) is produced using a variety of known methods such as extrusion molding, vacuum forming, injection molding, pressure forming, lamination molding, and blow molding.

The present molded product is a molded product including a resin composition containing a biodegradable resin (A) and cellulose (B), wherein the molded product preferably has a surface roughness Rₐ (arithmetic mean roughness) equal to or less than 43 µm. In particular, when the molded product is made of the present resin composition, a molded product such as pellets with particularly good appearance and a molded product with good mechanical properties can be obtained.

### [Surface Roughness Rₐ (Arithmetic Mean Roughness)]

As described above, the surface roughness Rₐ of the present molded product is preferably equal to or less than 43 µm, more preferably equal to or less than 40 µm, even more preferably equal to or less than 35 µm, particularly preferably equal to or less than 30 µm. The lower limit is, for example, about 20 µm, though not limited thereto.

### [Surface Roughness R_{Z} (Maximum Height Roughness)]

The surface roughness R_{Z} of the present molded product is preferably equal to or less than 400 µm, more preferably equal to or less than 390 µm, even more preferably equal to or less than 350 µm. The lower limit is, for example, about 100 µm, though not limited thereto.

The surface roughness R_{Z} and the surface roughness Rₐ are measured in conformity with JIS B0601(2001), more specifically, by the method described later in Examples.

The pellets according to the present molded product are a granular product of the present resin composition. More specifically, a resin composition at least containing the component (A) and the component (B) is melt kneaded by an extruder or the like, and the resulting melt kneaded product is cut into pellets using a strand cutter, an under water cutter, a hot cutter, or the like.

The shape of the pellets according to the present molded product is not limited, but examples include a cylindrical (including elliptic cylindrical), spherical, oval, cubic, and cuboid shapes. The cylindrical pellet has a size, for example, 0.5 to 5.0 mm, preferably 1.5 to 3.5 mm in length, and 1.0 to 3.0 mm, preferably 1.5 to 2.5 mm in diameter.

### [Applications of Molded Product]

The molded product including the present resin composition finds applications such as various sheets, foams, plates, fibers, and containers. More specifically, the molded product including the present resin composition can be used in applications including food films, fresh food trays and fast food containers, outdoor leisure products, fishing lines, fishing nets, vegetation nets, water retaining sheets, coating materials, agricultural mulching films, fertilizer coating materials, streaked tapes, split yarns, composite fibers, shopping bags, garbage bags, compost bags, cosmetic containers, detergent containers, bleach containers, ropes, binding materials, surgical thread, sanitary coverstock materials, cold storage boxes, cushioning materials, and synthetic paper.

### EXAMPLES

The present disclosure will be described more specifically below using examples. However, it should be understood that the present disclosure is not limited to the following examples within the scope of the present disclosure. In the examples, "parts" and "%" are based on mass.

First, the following components (A) to (C) were prepared.

### <Component (A)>

The followings were prepared as the biodegradable resin (A).
- Polybutylene succinate ["BiOPBS(FZ71 PM)" from PTT MCC Biochem Company Limited, melt flow rate (MFR) of 22 g/10 minutes (at 190°C with a load of 2.16 kg), melting point of 115°C]
- Polybutylene adipate terephthalate ["ecoflex" from BASF, melt flow rate (MFR) of 3 g/10 minutes (at 190°C with a load of 2.16 kg), melting point of 120°C]

### <Component (B)>

The followings were prepared as the cellulose (B).
- Cellulose (b1) ["ARBOCEL UFC100" from Rettenmaier]
- Cellulose (b2) ["ARBOCEL BE600-10TG" from Rettenmaier]
- Cellulose(b3) [mixture of cellulose (b1) and cellulose (b2) (b1:b2 = 2:8)]
- Cellulose(b4) [mixture of cellulose (b1) and cellulose (b2) (b1:b2 = 5:5)]
- Cellulose(b5) [mixture of cellulose (b1) and cellulose (b2) (b1:b2 = 8:2)]
- Cellulose (b') ["ARBOCEL B600" from Rettenmaier]
- Cellulose(b") ["KC FLOCK (W-400G)" from Nippon Paper Industries Co., Ltd.]

### <Component (C)>

The following was prepared as the filler (C).
- Talc ["SG-95" from NIPPON TALC CO., LTD., average particle diameter of 2.1 µm]

### <Method of Measuring D50 (Median Diameter), D10, D90 of Cellulose>

D50 (median diameter), D90, and D10 of the cellulose (b3, b4, b5, b', b") were measured by dry measurement using a laser diffraction/scattering particle size distribution analyzer (LA-950 V2 from HORIBA, Ltd.) under the following conditions, and D90/D10 was determined. The results are shown in Table 1.

### [Measurement Conditions]

- Measurement number of times (N): 10
- Sample data acquisition times (LD): 1000
- Iteration number: 15
- Measurement time : 1 minute (until particle size distribution result display)
- Measurement method: dry measurement (a unit designed for dry method was used)
- Measurement upper limit: 3000 µm
- Measurement lower limit: 0.01 µm
- Algorithm option: standard computation

### <Method of Measuring Average Fiber Length and Average Fiber Thickness of Cellulose>

The average fiber length and the average fiber thickness of the cellulose (b3, b4, b5, b', b") were measured from microscopic images using a digital microscope (RH-2000 from HiROX CO., LTD.) and a lens (MXB-5000REZ from HiROX CO., LTD.). Specifically, 10 images were taken using a digital microscope, and 10 independent fibers were selected at random for each of the obtained images and their fiber lengths and fiber thicknesses were read by visual inspection. The fiber having a start point and an end point in the same image was targeted. In this way, information on 10 fibers × 10 images = 100 fibers was obtained and averaged to calculate the average fiber length and the average fiber thickness. The results are shown in Table 1.

**Table 1**

| | D50 (µm) | D10 (µm) | D90 (µm) | D90/D10 | Average fiber length (µm) | Average fiber thickness (µm) |
|---|---|---|---|---|---|---|
| Cellulose (b3) | 16.8 | 9.1 | 30.7 | 3.4 | 18.1 | 13.2 |
| Cellulose (b4) | 15.0 | 8.0 | 28.2 | 3.5 | 18.4 | 10.6 |
| Cellulose (b5) | 13.4 | 7.4 | 24.9 | 3.4 | 18.6 | 8 |
| Cellulose (b') | 40.5 | 16.1 | 98.5 | 6.1 | 60 | 20 |
| Cellulose (b") | 30 | 13.3 | 82.7 | 6.2 | 34 | 9.8 |

### [Example 1]

A resin composition containing 44 parts by mass of polybutylene succinate and 11 parts by mass of polybutylene adipate terephthalate as the biodegradable resin (A), and 45 parts by mass of cellulose (b3) as the cellulose (B) was prepared, and pellets were produced under the following molding conditions.

### [Molding Conditions]

- Twin-screw extruder: KZW15-45/60MG from TECHNOVEL CORPORATION
- Screw shape: full-flight
- Screw rotation speed: 200 rpm
- Vent: fully closed
- Temperature condition:
   C1/C2/C3/C4/C5/C6/C7/C8/D1/D2 = 80°C/120°C/130°C/140°C/140°C/140°C/140°C/140°C/140°C/140°C
- Screen mesh: none
- Discharge amount: 1.1 kg/hour
- Strand: air cooling

### [Example 2]

Pellets were produced under the same conditions as in Example 1, using a resin composition prepared in the same way as in Example 1 except that cellulose (b3) was changed to cellulose (b4).

### [Example 3]

Pellets were produced under the same conditions as in Example 1, using a resin composition prepared in the same way as in Example 1 except that cellulose (b3) was changed to cellulose (b5).

### [Example 4]

Pellets were produced under the same conditions as in Example 2, using a resin composition prepared in the same way as in Example 2 except that 55 parts by mass of polybutylene succinate was used and polybutylene adipate terephthalate was not blended.

### [Example 5]

Pellets were produced under the same conditions as in Example 2, using a resin composition prepared in the same way as in Example 2 except that 27.5 parts by mass of polybutylene succinate and 27.5 parts by mass of polybutylene adipate terephthalate were used.

### [Example 6]

Pellets were produced under the same conditions as in Example 2, using a resin composition prepared in the same way as in Example 2 except that 11 parts by mass of polybutylene succinate and 44 parts by mass of polybutylene adipate terephthalate were used.

### [Example 7]

Pellets were produced under the same conditions as in Example 2, using a resin composition prepared in the same way as in Example 2 except that polybutylene succinate was not blended and 55 parts by mass of polybutylene adipate terephthalate was used.

### [Comparative Example 1]

A resin composition containing 39.2 parts by mass of polybutylene succinate, 9.8 parts by mass of polybutylene adipate terephthalate, 45.9 parts by mass of cellulose (b'), and 5.1 parts by mass of talc was prepared, and pellets were produced under the same conditions as in Example 1.

### [Comparative Example 2]

A resin composition containing 39.2 parts by mass of polybutylene succinate, 9.8 parts by mass of polybutylene adipate terephthalate, 45.9 parts by mass of cellulose (b"), and 5.1 parts by mass of talc was prepared, and pellets were produced under the same conditions as in Example 1.

### <Method of Measuring Resin Pressure during Molding>

The resin pressure during molding of pellets was measured using a resin pressure sensor (Dynisco NP463) attached to the die head of the twin-screw extruder. The results are shown in Table 2.

### <Method of Measuring Surface Roughness (Rₐ, R_{Z}) of Pellets>

The surface roughness (Rₐ, R_{Z}) of the pellets was measured in conformity with JIS B0601(2001). Specifically, 10 microscopic images (1.5 mm long × 1.5 mm wide) of cylindrical pellets (3.0 mm in length, 2.4 mm in diameter) were taken using a laser microscope (OPTELICS [non-contact type] from Lasertec Corporation) with a cutoff value (λc) of 0.8 mm. For each image, 10 lines were drawn in the horizontal direction with 150 µm spacings, and 10 pieces of data on each of the arithmetic mean roughness (Rₐ) and the maximum height roughness (R_{Z}) in a side surface of the pellet was measured for each image. The average of 100 values (10 microscopic images × 10 pieces of data) of each of Rₐ and R_{Z} was calculated. The results are shown in Table 2.

### <Method of Evaluating Injection Moldability>

A dumbbell-shaped test specimen (type A1) with a total length of 170 mm was produced by injection molding in conformity with JIS K7139:2009. Specifically, the pellets obtained above were fed to an injection molding machine (electric type injection molding device NEX30IV-3EG from NISSEI PLASTIC INDUSTRIAL CO., LTD.,) and injected into a mold at a mold temperature of 35°C for an injection time of 8 s at a screw rotation speed of 100 to 150 rpm, a dwelling pressure of 50 to 80 MPa, and a back pressure of 4 to 6 MPa to produce a dumbbell-shaped test specimen (type A1) in conformity with JIS K7139:2009.

The moldability was evaluated according to the following criteria. The results are shown in Table 2.
A: maximum pressure of 185 MPa or less, dumbbell-shaped test specimen continuous production possible, no surface coarseness in dumbbell-shaped test specimen
A': maximum pressure of more than 185 to 200 MPa or less, dumbbell-shaped test specimen production possible, no surface coarseness in dumbbell-shaped test specimen
B: maximum pressure of more than 200 MPa, dumbbell-shaped test specimen production possible, no surface coarseness in dumbbell-shaped test specimen
B': maximum pressure of more than 200 MPa, dumbbell-shaped test specimen production possible, surface coarseness in dumbbell-shaped test specimen
C: maximum pressure of more than 200 MPa, dumbbell-shaped test specimen production impossible

### <Method of Evaluating Mechanical Properties>

Tensile testing was conducted on the dumbbell-shaped test specimen produced as described above using a tensile tester (Autograph AG-IS from Shimadzu Corporation) in conformity with JIS K7161-1:2014 (ISO 527-1:2012). As for the measurement conditions, the dumbbell-shaped test specimen with a total length of 170 mm was measured with a gripping distance of 115 mm, at a test speed of 50 mm/min, and at 23°C and 50%RH to obtain a stress σ (MPa)-strain ε (%) curve. The strain at break and the maximum stress were determined from the resulting stress σ (MPa)-strain ε (%) curve. The results are shown in Table 2.

**Table 2**

| | D90/D10 of component (B) | Appearance evaluation | | Moldability evaluation | | Mechanical properties evaluation | |
|---|---|---|---|---|---|---|---|
| | | Surface roughness Ra (µm) | Surface roughness RZ (µm) | Resin pressure (MPa) during molding | Injection moldabilit y | Strain at break (%) | Maximum stress (MPa) |
| Example 1 | 3.4 | 28.6 | 314 | 5.2 | A | 3.5 | 16.9 |
| Example 2 | 3.5 | 26.2 | 265 | 5.2 | A | 4 | 18.6 |
| Example 3 | 3.4 | 23.9 | 242 | 5.1 | A | 3.6 | 19.7 |
| Example 4 | 3.5 | 22.9 | 230 | 5 | A | 4.7 | 21.1 |
| Example 5 | 3.5 | 22.1 | 208 | 6.3 | A' | 6.8 | 15.5 |
| Example 6 | 3.5 | 22.0 | 205 | 7.9 | B | 11.9 | 12.8 |
| Example 7 | 3.5 | 23.1 | 237 | 9.7 | B' | 17.6 | 11.5 |
| Comparativ e Example 1 | 6.1 | 47.7 | 469 | 10.2 | C | - | - |
| Comparativ e Example 2 | 6.2 | 43.8 | 421 | 10 | C | - | - |
| * "-" indicates that measurement was impossible because of failure in production of a test specimen (injection moldability evaluation C). | | | | | | | |

As shown in Tables 1 and 2, it was demonstrated that the surface smoothness of the pellets is high in Examples 1 to 7 in which the ratio (D90/D10) between a 90% cumulative mean fiber diameter (D90) and a 10% cumulative mean fiber diameter (D10) of the cellulose included in the resin composition is equal to or less than 5.5, compared with Comparative Examples 1 and 2 in which the ratio (D90/D10) exceeds 5.5. As shown in Table 2, in Examples 1 to 7, the resin pressure during molding of pellets is low, and the injection moldability and the mechanical properties are excellent. It was therefore demonstrated that a resin composition with excellent moldability as well as a molded product with good appearance and good mechanical properties can be obtained according to the present disclosure.

The comparison between Examples 1 to 7 showed that the aliphatic polyester resin having an aliphatic diol unit and an aliphatic dicarboxylic acid unit as main repeating units, such as polybutylene succinate, is preferable as a biodegradable resin. The comparison between Examples 1 to 7 also showed that it is preferable to include a predetermined amount or more of the aliphatic polyester resin having an aliphatic diol unit and an aliphatic dicarboxylic acid unit as main repeating units, such as polybutylene succinate.

The ratio (D90/D10) of the cellulose included in the resin composition can be determined, for example, by extracting only the cellulose using a solvent that dissolves components other than cellulose in the resin composition, then drying the extracted cellulose, and measuring the resulting cellulose according to <Method of Measuring D50 (Median Diameter), D10, D90 of Cellulose> described above.

While specific forms of the embodiments of the present disclosure have been shown in the above examples, the examples are merely illustrative and should not be considered as limiting. It is contemplated that various modifications apparent to those skilled in the art could be made within the scope of the present disclosure.

### INDUSTRIAL APPLICABILITY

The molded product including the resin composition according to the present disclosure has biodegradability, good moldability, and good appearance and mechanical properties, and therefore can be effectively used as raw materials of a wide variety of molded products and can contribute to further reduction of environmental burdens.

## Claims

1. A resin composition comprising a biodegradable resin (A) and cellulose (B), wherein a ratio (D90/D10) between a 90% cumulative mean fiber diameter (D90) and a 10% cumulative mean fiber diameter (D10) of the cellulose (B) is equal to or less than 5.5.

2. A resin composition comprising a biodegradable resin (A) and cellulose (B), wherein a ratio (D90/D10) between a 90% cumulative mean fiber diameter (D90) and a 10% cumulative mean fiber diameter (D10) of the cellulose (B) is less than 4.2.

3. The resin composition according to claim 1 or 2, wherein the biodegradable resin (A) comprises an aliphatic polyester resin.

4. The resin composition according to claim 1 or 2, wherein the biodegradable resin (A) comprises an aliphatic polyester resin including an aliphatic diol unit and an aliphatic dicarboxylic acid unit as main repeating units.

5. The resin composition according to claim 4, wherein the biodegradable resin (A) further comprises an aliphatic aromatic polyester resin.

6. The resin composition according to claim 1 or 2, wherein the cellulose (B) has an average fiber length equal to or less than 150 µm.

7. The resin composition according to claim 1 or 2, wherein the cellulose (B) is present in an amount equal to or more than 30% by mass of a total amount of the resin composition.

8. The resin composition according to claim 1 or 2, wherein the resin composition has a strain at break of 0.1 to 30% as measured in conformity with JIS K7161-1:2014 (ISO 527-1:2012).

9. The resin composition according to claim 1 or 2, wherein the resin composition has a maximum stress of 1 to 30 MPa as measured in conformity with JIS K7161-1:2014 (ISO 527-1:2012).

10. A molded product comprising the resin composition according to claim 1 or 2.

11. A container comprising the resin composition according to claim 1 or 2.

12. A pellet comprising a resin composition comprising a biodegradable resin (A) and cellulose (B), wherein the pellet has an arithmetic mean surface roughness Rₐ equal to or less than 43 µm.

13. A pellet comprising a resin composition comprising a biodegradable resin (A) and cellulose (B), wherein the pellet has a surface roughness Rₐ equal to or less than 30 µm.

14. The pellet according to claim 12 or 13, wherein the pellet has a maximum height surface roughness R_{Z} equal to or less than 400 µm.

15. The pellet according to claim 12 or 13, wherein the biodegradable resin (A) comprises an aliphatic polyester resin.

16. The pellet according to claim 12 or 13, wherein the biodegradable resin (A) comprises an aliphatic polyester resin including an aliphatic diol unit and an aliphatic dicarboxylic acid unit as main repeating units.

17. The pellet according to claim 16, wherein the biodegradable resin (A) further comprises an aliphatic aromatic polyester resin.

18. The pellet according to claim 12 or 13, wherein the cellulose (B) has an average fiber length equal to or less than 150 µm.

19. The pellet according to claim 12 or 13, wherein the cellulose (B) is present in an amount equal to or more than 30% by mass of a total amount of the resin composition.
